# EUROPEAN PATENT APPLICATION

(11) **EP 1 975 596 A2**
(43) Date of publication of application: **01.10.2008**
(21) Application number: 08153339.0
(22) Date of filing: 26.03.2008
(51) Int. Cl.: G01N 3/32, G09B 23/28

(54) **Anatomically compliant AAA model and the method of manufacture for In vitro simulated device testing**

(30) Priority: 28.03.2007 US 692615
(71) Applicant: Cordis Corporation, Miami Lakes, FL 33014 (US)
(72) Inventor: Olsen, Daniel, Califon, NJ NJ 07830 (US); Grishaber, Randy-David Burce, Asbury, NJ NJ 08802 (US)
(74) Representative: Belcher, Simon James

(57) **Abstract**

The present invention is directed to the fabrication of a test apparatus and the test apparatus itself. The test apparatus is designed to be a component used in a durability/fatigue testing unit.

In one embodiment, a method of making a model for a fatigue testing apparatus, the method comprises:
generating a three-dimensional virtual model of an anatomical structure;
inputting the three-dimensional virtual model into a rapid prototype fabrication system to create a physical model of the anatomical structure, the physical model of the anatomical structure being substantially the same dimensionally, both internally and externally, as the anatomical structure;
creating a mold from the physical model of the anatomical structure;
creating a final physical model of the anatomical structure that is substantially the same dimensionally, both internally and externally, as the anatomical structure and mechanically equivalent of the anatomical structure; and
incorporating the final physical model of the anatomical structure into a fatigue testing apparatus.

## Description

The present invention relates to both a method of manufacturing a model or test apparatus and the model or test apparatus itself. The test apparatus fabricated in accordance with the present invention is designed to be a component used in a durability and fatigue testing unit or apparatus and more particularly for the testing of an endovascular prosthesis. More particularly, the present invention is directed to a method of making a life-size anatomically correct model of an abdominal aortic aneurysm (AAA) with any suitable rapid prototyping (RP) process that creates solid freeform parts and then using the part to create a mold from which a finished test apparatus may be made. A RP process shall be considered any effective means by which to reduce a virtual concept into a physical structure with three-Dimensional (3D) features in a timeframe that is considerably shorter in duration than conventional means known to those skilled-in-the-art. The preferred RP processes used in the second step of manufacturing the test apparatus of the present invention include selective laser sintering (SLS) and photopolymer jetting. The present invention is also directed to the AAA model produced by the methods described herein and its use as a component in a vascular durability and fatigue testing unit or apparatus.

The aorta is the body□ s largest artery, having roughly the diameter of a standard garden hose, and is the blood vessel that carries oxygen-rich blood away from the heart. The aorta extends from the heart down through the chest and into the abdominal region, dividing into two smaller blood vessels that provide blood to the pelvis and legs. An aortic aneurysm is an abnormal bulge that can occur anywhere along the wall of the aorta. Most aortic aneurysms, about seventy-five percent, arise in the section running through one□s abdomen and are thus referred to as □ abdominal aortic aneurysms. □ Other aortic aneurysms, referred to as □ thoracic aortic aneurysms,□ occur in the section of the aorta running through one□s chest.

The rupturing of an aortic aneurysm causes life-threatening internal bleeding. Of course, the larger an aneurysm is, the higher the risk of it rupturing. Approximately 15,000 people die each year in the United States of a ruptured aortic aneurysm. If detected in time, an aortic aneurysm can usually be repaired by surgery. The surgical treatment of an aneurysm typically involves the use of a replacement vessel or an artificial prosthesis following the excision of the aneurysm. In other instances, stress can be relieved in the affected vessel by implanting a supporting structure such as a stent or other intravascular device therein. Implantable devices are well-known in the art and include stents, grafts, stent-grafts, catheters, embolic coils, filters and cannulas.

A major concern, however, in the use of a vascular prosthesis in treating aortic aneurysms or any other vascular problem is the fact that the device is being implanted within the aorta of the patient and is subjected to numerous physiological conditions (physiological loading conditions) for the remainder of it□s life or the life of the patient. Accordingly, it is important that the fatigue and durability characteristics of the implantable device be subjected to sufficient testing for its intended use.

US-6,810,751 to Moreno et al. describes a method and apparatus for testing the vascular durability and fatigue resistance of a vascular prosthesis that simulates physiological loading conditions. One component in the apparatus is a fluid conduit manufactured to recreate the physical properties and characteristics of a vessel intended to receive the implantable device, for example, a stent-graft. In US-6,810,751, the fluid conduit is made of a transparent silicone elastomer and in one embodiment is bifurcated to correspond with the size and shape of a human aorta. US-6,511,325 to Lalka et al. also discloses an abdominal aortic aneurysm model made of silicone.

The majority of AAA models used in any sort of testing are made out of either blown glass or silicone tubing. Although able to be made to simulate the aorta to a certain degree in size and shape, such models are limiting in their construction due to their composition and method of manufacturing. That is, there is still a need to provide a method of forming an anatomically correct AAA model to be used in a fatigue and durability testing apparatus that allows the model or apparatus to be easily changed from the fabrication of one model to the next to match the desired anatomy of the patient being treated. The use of blown glass and/or silicone tubing does not afford such flexibility.

The present invention overcomes the limitations in treating disease such as abdominal aortic aneurysms as briefly described above.

Accordingly, the present invention is directed to the fabrication of a test apparatus and the test apparatus itself. The test apparatus is designed to be a component utilized in a durability/fatigue testing unit. One such test apparatus made in accordance with the present invention is a life-size model of an abdominal aortic aneurysm made from a mold that was created from an original pattern that was made by any rapid prototyping process that creates solid freeform parts. A preferred rapid prototyping process used to make the model pattern in accordance with the present invention is the process known as selective laser sintering (SLS), while the preferred material used in the process is any material from which a mold could be made. Another preferred rapid prototyping process used to make the model in accordance with the present invention is the process known as photopolymer jetting.

In accordance with one aspect, the present invention is directed to a method of making a model for a fatigue testing apparatus, the method comprising generating a three-dimensional virtual model of an anatomical structure, inputting the three-dimensional virtual model into a rapid prototype fabrication system to create a physical model of the anatomical structure, the physical model of the anatomical structure being substantially the same dimensionally, both internally and externally, as the anatomical structure, creating a mold from the physical model of the anatomical structure, creating a final physical model of the anatomical structure that is substantially the same dimensionally, both internally and externally, as the anatomical structure and mechanically equivalent of the anatomical structure, and incorporating the final physical model of the anatomical structure into a fatigue testing apparatus.

Embodiments of the invention will now be described by way of example with reference to the accompanying drawings, in which:
Figure 1 is an image of the CAD model created in accordance with the present invention.
Figure 2 is a photograph of a three-dimensional, life-size AAA model, from which a subsequent mold can be made, manufactured in accordance with the present invention using SLS technology.
Figure 3 is a photograph of a three-dimensional, life-size AAA model, made of urethane, manufactured in accordance with the present invention.
Figure 4 is a flow chart of the steps of the process in accordance with the present invention.

The present invention is directed a method of manufacturing a test apparatus, as well as the test apparatus itself. Although the majority of the description will be directed to the fabrication of a life-size model of an abdominal aortic aneurysm, it will be understood that the AAA region is not the only region that may be duplicated by the method of the present invention, but rather substantially any other anatomic structure. For example, the method of the present invention may also be used in the formation of models of other arteries, or even the heart, and used in a durability/fatigue unit to test devices to be used in connection with these regions.

Accordingly, the present invention is directed to a method of making a life-size, anatomically correct model of an abdominal aortic aneurysm from a mold of which the original pattern is made with any suitable rapid prototyping (RP) process that creates solid freeform parts. With the use of rapid prototyping methods it is possible to fabricate a structural body based directly on geometrical data of the structural body generated by a computer-aided design (CAD) program. In addition to enabling the ability to reduce to practice a useable life-size, anatomically correct model of an abdominal aortic aneurysm with any suitable rapid prototyping (RP) process, the preferred embodiment may enable the reduction to practice of a scaled, anatomically correct model by use of conventional CAD programs when utilized by one of relevant skill-in-the-art. The scaling aspect may be both enlarged and correspondingly reduced in overall physical size while maintaining all appropriate internal and external dimensional aspects.

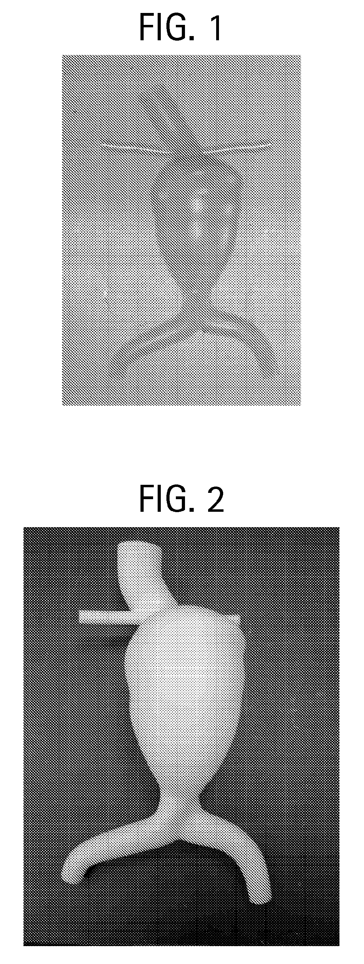

Accordingly, the first step in the manufacturing of the test apparatus in accordance with the present invention is the creation of a three-dimensional virtual model of the anatomical structure such as a AAA with a CAD program. The CAD program, based on clinical data and measurements, determine the size of the AAA CAD model. Solidworks (□ SolidWorks, □ Concord Mass.) is the CAD program used in the making of the AAA CAD model shown in Figure 1, however, other suitable CAD software packages, such as ProEngineer (Parametric Technologies, Waltham, Mass.) are known in the art and may be used to further process the digital or virtual model.

The CAD system is essential in that it allows the test apparatus being fabricated to be changed to match the desired anatomy. For example, the three-dimensional geometry in the CAD system may be modeled to have tortuous regions or not, or anatomy size may be larger or smaller. Furthermore, geometry imported from spiral CT scans of an AAA could be used to make the model. Also, the elastic modulus of individual AAA models could potentially vary, one from the next, as desired. Basically, the present invention is building a life-size anatomically correct, three-dimensional model of the patient□s AAA or other anatomical structure.

The data utilized to create the three-dimensional model may be captured in any number of suitable ways, including CAT scans and ultrasounds. As described above, the data is entered into a CAD program that generates the three-dimensional virtual model of the anatomical structure. This virtual model is dimensionally accurate, both internally and externally.

The next step in the method of manufacturing the test apparatus in accordance with the present invention is the creation of the test apparatus through any rapid prototyping method that has the capability to create flexible or stiff models from which a mold may be made. Essentially, in this step, the three-dimensional model of the anatomical structure is converted into a physical model of the anatomical structure. This physical model is substantially the same dimensionally, both internally and externally, as the actual anatomical structure. The process of rapid prototyping, more recently referred to as a layer manufacturing (LM) process or a solid free-form fabrication (SFF) process, creates its product by building it up point-by-point or layer-by-layer. The use of a SFF process allows one to fabricate components having a complex geometry which otherwise could not be made by traditional fabrication methods.

Examples of SFF techniques include stereo lithography, selective laser sintering, 3-D printing, inkjet printing, fused deposition modeling, laser powder forming and laminated object manufacturing. As indicated above, rapid prototyping processes are driven by directions derived from three-dimensional CAD models. Consequently, CAD technologies are an essential enabling system for rapid prototyping. Although the various RP processes known in the art are based on different physical principles, they each essentially work by either using lasers to cut, cure or sinter material into a layer, or involve ejecting material from a nozzle to create a layer. Each method has advantages and disadvantages to be weighed and are known to those skilled in the art.

The AAA model made in accordance with the present invention, as shown in Figure 2, was created with the use of Selective Laser Sintering (SLS). SLS allows for the use of a variety of different polymers and is very accurate when compared with other RP methods. Generally, SLS involves tracing a laser beam over the surface of a tightly compacted powder made of a thermoplastic material. The powder is spread by a roller over the surface of a build cylinder. A piston moves down one object layer thickness to accommodate the layer of powder. Heat from the laser melts the powder where it strikes under guidance of a scanner system. A concentrated infrared heating beam is provided via the use of a CO₂ laser. The entire fabrication chamber is sealed and maintained at a temperature just below the melting point of the plastic powder. Accordingly, the heat from the laser need only elevate the temperature slightly to cause sintering. Following the full formation of the object, the piston is raised to elevate the object and any excess powder is brushed away. Any final manual finishing to the object may then be carried out as well.

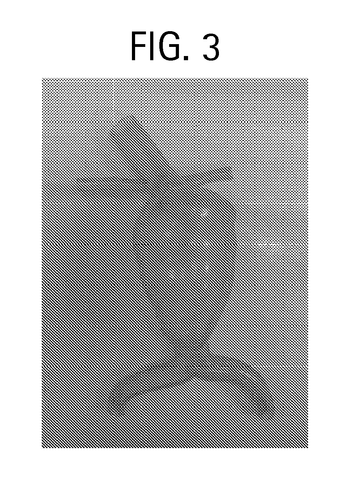

An alternate rapid prototyping process that may be utilized to create the physical model is inkjet printing. Figure 3 shows a physical model of an abdominal aortic aneurysm that was manufactured from a mold that was made from a pattern manufactured utilizing inkjet printing. More specifically, a photopolymer phase change inkjet printing process is utilized. Objet Geometries Ltd (Israel) provides the technology that utilized wide area inkjets to deposit layers of photopolymers to form parts. It subsequently completely cures each layer after it is deposited with a UV flood lamp mounted on the printhead. The support material, which is also a photopolymer, is removed by washing it away with pressurized water in a secondary operation.

An important variable in the manufacturing of the test apparatus in accordance with the present invention is the selection of the flexible or stiff material to be used in the RP process that a mold may be easily made from. The material to be used in the RP process of the present invention depends on the particular RP process being employed and are generally known in the art. Many different materials may be used and include thermopolymers, photopolymers, elastomeric polymers, metallic powder, paper and wax. The material used in the SLS method to create the AAA model shown in Figure 2 in accordance with the present invention is an elastomeric polymer available under the trademark Somos ®201. Laser sintered structures made with elastomers may be manufactured faster and less expensive than cast structures. Manufacturing or prototyping utilizing the SLS process is faster and less expensive because errors may be corrected early on in this process. This material has been proven to stand up to aggressive field tests with excellent results. Other preferred materials to be used with SLS are DuraFlex (Nylon 12 Unfilled) and DuraFlex (Nylon 12 Glass Filled), while 7545-Flex (High Detail and Accuracy) and DSM-14120 (High Strength ABS Like) are materials preferred to be used with stereolithography processes.

The final material used to create the AAA model shown in Figure 3 in accordance with the present invention is urethane while other materials may be utilized, urethane is preferable. The urethane has a durometer of 40A to match the modulus of a human aorta. However, the material used to create the original pattern part from which the mold was created was a liquid resin material developed by Objet.

Once the physical model is made, for example, using the Objet technology, a thin coat of urethane is applied to the surface of the physical model to make it smooth.

The next step in the method of manufacturing the test apparatus in accordance with the present invention is the creation of a mold from the physical model of the anatomical structure. As described above, the physical model of the anatomical structure is substantially the same dimensionally, both internally and externally, as the actual anatomical structure. Accordingly, the mold made therefrom will produce a structure that will be substantially the same dimensionally, both internally and externally, as the actual anatomical structure. The mold may be created utilizing any suitable material and any suitable technique, both of which are known in the art.

The next step in the method of manufacturing the test apparatus in accordance with the present invention is the creation of a final physical model of the anatomical structure that is substantially the same dimensionally, both internally and externally, as the anatomical structure and mechanically equivalent to the anatomical structure. The final physical model is created utilizing the mold created in the previous step. The casting of the final physical model may be accomplished utilizing techniques known in the art.

The final physical model of the anatomical structure is substantially the same dimensionally, both internally and externally, as the actual anatomical structure because the mold is created that way. The final physical model of the anatomical structure is mechanically equivalent to the actual anatomical structure through the proper selection of the material from which the final model is cast. Skilled practitioners in the art preferably select the material and/or combination of materials that when cast to the same dimensions as that of the actual anatomical structure have and behave mechanically equivalent to that of the anatomical structure under in vivo conditions. In the exemplary embodiment, a urethane is utilized to create the final physical model. In this manner, the final physical model of the anatomical structure may be utilized for testing devices and systems that may be utilized to treat the particular disease state. For example, the model of the abdominal aortic aneurysm shown in Figures 1 through 3 may be utilized as part of a test apparatus for testing the characteristics of a covered stent or stent-graft. In this manner, a stent-graft may be placed in the final physical model, the final physical model is then subjected to the loading conditions that as closely approximate the in vivo conditions and then finally the stent-graft is evaluated for the effects of these loading conditions, including the effects of fatigue and durability. Accordingly, the final step in the process is incorporating the final physical model into a fatigue testing apparatus.

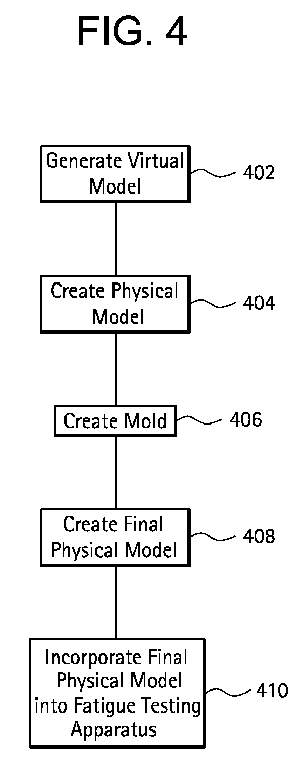

Figure 4 illustrates a single flow diagram 400 of the process. The five steps, 402, 404, 406, 408 and 410 correspond to the process described above.

More specifically, the present invention is also directed to the AAA model produced by the rapid prototyping procedure. The use of a SFF method provides for the fabrication of models having complicated thin-walled parts. The flexible AAA model or test apparatus may in turn be used as a component in a fatigue and durability testing apparatus. For example, the flexible AAA model made in accordance with the present invention may be used as a component in a testing unit for testing the durability and fatigue resistance of vascular prostheses, such as stents and grafts. With the use of the flexible AAA model made in accordance with the present invention in such a testing unit, the testing unit would more fully simulate the various physiological stresses induced upon the vascular prosthesis and could be made to match the specific anatomy of a particular patient.

While there has been shown and described what is considered to be preferred embodiments of the invention, it will, of course, be understood that various modifications and changes in form or detail could readily be made without departing from the scope of the invention, which is defined by the appended claims.

## Claims

1. A method of making a model for a fatigue testing apparatus, the method comprising:
generating a three-dimensional virtual model of an anatomical structure;
inputting the three-dimensional virtual model into a rapid prototype fabrication system to create a physical model of the anatomical structure, the physical model of the anatomical structure being substantially the same dimensionally, both internally and externally, as the anatomical structure;
creating a mold from the physical model of the anatomical structure;
creating a final physical model of the anatomical structure that is substantially the same dimensionally, both internally and externally, as the anatomical structure and mechanically equivalent of the anatomical structure; and
incorporating the final physical model of the anatomical structure into a fatigue testing apparatus.

2. The method according to claim 1, wherein said rapid prototyping process is selected from the group comprising stereolithography, selective laser sintering, 3-D printing, inkjet printing, fused deposition modeling and laminated object manufacturing.

3. The method according to claim 1, wherein said rapid prototyping process is selective laser sintering.
